# EUROPEAN PATENT SPECIFICATION

(11) **EP 2 243 983 B1**
(45) Date of publication and mention of the grant of the patent: **01.08.2012**
(21) Application number: 09179865.2
(22) Date of filing: 18.12.2009
(51) Int. Cl.: F16H 3/00, F16H 3/093, F16H 3/12

(54) **Twin clutch type transmission for diesel railcar**
Doppelkupplungsgetriebe für Dieselschienenfahrzeug
Transmission de type embrayage double pour autorail diesel

(30) Priority: 24.12.2008 JP 2008327241
(43) Date of publication of application: 27.10.2010
(73) Proprietor: Hitachi Nico Transmission Co., Ltd., Saitama 331-0811 (JP)
(72) Inventor: Nakamura, Hideki, Saitama-shi Saitama 331-0811 (JP)
(74) Representative: TBK

(56) References cited:
- WO-A1-92/08067
- AT-B- 190 394
- GB-A- 2 036 208
- GB-A- 2 110 324
- US-A1- 2002 042 852
- US-A1- 2006 025 272

## Description

### BACKGROUND OF THE INVENTION

### 1. Field of the Invention

The present invention relates to a twin clutch type transmission for a diesel railcar that uses two or more clutches to control shift gear changes.

### 2. Description of the Related Art

A conventional transmission for a diesel railcar (diesel motor unit) includes a torque convertor for transmitting the power of an engine, multiple shift gears to be connected to the torque convertor, and wet type multiple disc clutches for switching between the shift gears (see Patent Document 1). Techniques to improve the transmission efficiency of transmissions for diesel railcars by employing mechanical clutches instead of wet type multiple disc clutches are also proposed (see Patent Documents 2 and 3).

In recent years, twin clutch type transmissions for automobiles are in practical use (see Patent Document 4 and Non-Patent Document 1). Such twin clutch type transmissions have already been used as transmissions for racing cars.
[Patent Document1] Japanese Utility Model Registration No. 2565596
[Patent Document 2] Japanese Utility Model Application Laid-Open No. Hei 02-103555
[Patent Document 3] Japanese Patent Application Laid-Open No. Hei 01-220761
[Patent Document 4] Japanese Patent Application Laid-Open No. 2003-269592
[Non-Patent Document 1] Mitsubishi Motors Technical Review, 2008, No. 20, pp. 31-34

In a transmission for a diesel railcar, because of the output characteristics of the engine, power is transmitted through a torque convertor in a low car speed range to obtain tractive force. Generally, the transmission efficiency of a torque convertor is low because the power is transmitted through fluid. Therefore, the longer the time of operation with the torque convertor is, the lower the transmission efficiency of the transmission is.

In recent years, to improve the transmission efficiency, the number of shift gears of transmissions is increased to 3 or 4, and direct driving without a torque convertor is used during medium to high-speed driving. However, the increase in the number of shift gears results in an increase in the number of wet type multiple disc clutches provided for the shift gears. Non-engaged wet type multiple disc clutches (that are not involved in power transmission) are at idle, and this causes idling loss. Even when the number of shift gears is increased to reduce the time of operation through a torque convertor, the number of idle wet type multiple disc clutches increases, so that idling loss increases. Therefore, in practice, it is difficult to significantly improve the efficiency. In particular, since diesel railcars are operated for a long period of time, the idling loss of the wet type multiple disc clutches is not insignificant.

In transmissions for diesel railcars, the inertia of their power transmission system is much greater than that of automobiles. Therefore, a frictional synchronization mechanism with synchromesh, which is employed in automobiles, cannot be used. If any of the mechanical clutches shown in Patent Documents 2 and 3 are employed instead, the synchronization control system for the clutches becomes undesirably complicated. In particular, when the number of shift gears is increased to allow direct diving also in a low-speed range, the synchronization control is further complicated. All the above twin clutch type transmissions for automobiles have structures with synchromesh. Therefore, such twin clutch type transmissions cannot be used without modification when large power, large torque, and large inertia are transmitted, as in diesel railcars.

Further prior art document GB 2 110 324 A which forms the closest prior art according to the preamble of claim 1 discloses that in a power-shift gearbox with overall gear ratios for forward drive which are substantially in geometric progression, there are employed only two full power transmitting friction clutches which alternately drive respective layshafts from an input shaft.

Another prior art document WO 92/08067 discloses a power shift motor vehicle gearbox with an input shaft (1), two countershafts (2, 3) and a central synchronizer (30). The input shaft has a gear wheel (5) in engagement with a gear wheel (6) freely rotatably mounted on one countershaft (2) and lockable by a friction clutch (7) to the shaft, said gear wheels forming a pair for driving the countershaft. The input shaft also has a freely rotatably mounted gear wheel (8) which can be locked by a friction clutch (10) to the shaft, said gear wheel (8) engaging a gear wheel (9) on the other countershaft (3) for driving the same when the clutch is engaged.

### SUMMARY OF THE INVENTION

The present invention has been made in view of the above problems, and it is an object of the invention to improve the efficiency of power transmission of a twin clutch type transmission for a diesel railcar using a compact and simple structure.

This object is solved by a transmission having the features of claim 1. Further developments are stated in the dependent claims.

The present invention provides a twin clutch type transmission for a diesel railcar, the twin clutch type transmission including: an input shaft to which power of an engine is inputted; an odd-numbered gear-side shifting mechanism to which rotation of the input shaft is transmitted; an even-numbered gear-side shifting mechanism to which the rotation of the input shaft is transmitted; and an output mechanism to which power of the odd-numbered gear-side shifting mechanism and power of the even-numbered gear-side shifting mechanism are transmitted, wherein the odd-numbered gear-side shifting mechanism includes: an odd-numbered gear-side transmission gear train for transmitting the rotation of the input shaft; an odd-numbered gear-side transmission shaft; an odd-numbered gear-side main clutch for selectively transmitting power of the odd-numbered gear-side transmission gear train to the odd-numbered gear-side transmission shaft; an odd-numbered gear-side synchronization gear train for transmitting the rotation of the input shaft; an odd-numbered gear-side synchronization clutch for selectively transmitting power of the odd-numbered gear-side synchronization, gear train to the odd-numbered gear-side transmission shaft; an odd-numbered gear-side shifting gear train that is provided for the odd-numbered gear-side transmission shaft and transmits rotation thereof to the output mechanism; and an odd-numbered gear-side mechanical clutch that selectively connects the odd-numbered gear-side shifting gear train to the odd-numbered gear-side transmission shaft, and wherein the even-numbered gear-side shifting mechanism includes: an even-numbered gear-side transmission gear train for transmitting the rotation of the input shaft; an even-numbered gear-side transmission shaft; an even-numbered gear-side main clutch for selectively transmitting power of the even-numbered gear-side transmission gear train to the even-numbered gear-side transmission shaft; an even-numbered gear-side synchronization gear train for transmitting the rotation of the input shaft; an even-numbered gear-side synchronization clutch for selectively transmitting power of the even-numbered gear-side synchronization gear train to the even-numbered gear-side transmission shaft; an even-numbered gear-side shifting gear train that is provided for the even-numbered gear-side transmission shaft and transmits rotation thereof to the output mechanism; and an even-numbered gear-side mechanical clutch that selectively connects the even-numbered gear-side shifting gear train to the even-numbered gear-side transmission shaft.

The twin clutch type transmission of the present invention can provide a plurality of shift gears, and an inter-gear ratio between the adjacent shift gears (for example an inter-gear ratio between the first shift gear and the second shift gear 5.274/4.110=1.283) is set to a substantially constant value.

In the twin clutch type transmission of the present invention, a gear ratio of the odd-numbered gear-side transmission gear train and a gear ratio of the even-numbered gear-side transmission gear train are set such that a ratio of a rotation speed of the even-numbered gear-side transmission shaft to a rotation speed of the odd-numbered gear-side transmission shaft is substantially equal to the predetermined inter-gear ratio.

In the twin clutch type transmission of the present invention, at least the odd-numbered gear-side shifting gear train includes a plurality of shifting gear trains, and a gear ratio of one of the odd-numbered gear-side shifting gear trains is substantially equal to a gear ratio of the adjacent even-numbered gear-side shifting gear train. The odd-numbered gear-side shifting gear train and the even-numbered gear-side shifting gear train may share a shift gear of the output mechanism.

In the twin clutch type transmission of the present invention, a gear ratio of the odd-numbered gear-side synchronization gear train may be set so as to be substantially equal to a value obtained by dividing the gear ratio of the odd-numbered gear-side transmission gear train by the predetermined inter-gear ratio, and a gear ratio of the even-numbered gear-side synchronization gear train may be set so as to be substantially equal to a value obtained by dividing the gear ratio of the even-numbered gear-side transmission gear train by the predetermined inter-gear ratio.

In the twin clutch type transmission of the present invention, the gear ratio of the odd-numbered gear-side synchronization gear train may be substantially equal to the gear ratio of the even-numbered gear-side transmission gear train, and the odd-numbered gear-side synchronization gear train and the even-numbered gear-side transmission gear train may share a shift gear on the input shaft.

In the twin clutch type transmission of the present invention, the odd-numbered gear-side transmission shaft and the even-numbered gear-side transmission shaft each are provided with a synchronization brake.

In the twin clutch type transmission of the present invention, the output mechanism may include an output shaft and a forward-reverse rotation switching mechanical clutch for switching between forward rotation and reverse rotation of the output shaft.

The twin clutch type transmission of the present invention may further comprises a forward-reverse rotation switching mechanical clutch for switching between forward rotation and reverse rotation of the output shaft, the forward-reverse rotation switching mechanical clutch being disposed on the input shaft.

According to the present invention, a twin clutch type transmission for a diesel railcar can be obtained which has a compact and simple structure and has high transmission efficiency.

### BRIEF DESCRIPTION OF THE DRAWINGS

Fig. 1 is a skeleton diagram illustrating the general configuration of a twin clutch type transmission for a diesel railcar according to an embodiment of the present invention.
Fig. 2 is a diagram illustrating the flow of torque in first shift gear in the twin clutch type transmission for a diesel railcar.
Fig. 3 is a diagram illustrating the flow of torque during preparation operation for second shift gear in the twin clutch type transmission for a diesel railcar.
Fig. 4 is a diagram illustrating the flow of torque in second shift gear in the twin clutch type transmission for a diesel railcar.
Fig. 5 is a diagram illustrating the flow of torque during preparation operation for third shift gear in the twin clutch type transmission for a diesel railcar.
Fig. 6 is a diagram illustrating the flow of torque in third shift gear in the twin clutch type transmission for a diesel railcar.
Fig. 7 is a diagram illustrating the flow of torque during preparation operation for second shift gear in the twin clutch type transmission for a diesel railcar.
Fig. 8 is a diagram illustrating the flow of torque in second shift gear in the twin clutch type transmission for a diesel railcar.
Fig. 9 is a diagram illustrating the flow of torque during preparation operation for first shift gear in the twin clutch type transmission for a diesel railcar.
Fig. 10 is a diagram illustrating the flow of torque in first shift gear in the twin clutch type transmission for a diesel railcar.
Fig. 11 is a skeleton diagram illustrating the general configuration of a twin clutch type transmission for a diesel railcar according to another embodiment of the present invention.
Fig. 12 is a diagram illustrating the flow of torque in a forward rotation state in the twin clutch type transmission for a diesel railcar.
Fig. 13 is a diagram illustrating the flow of torque in a reverse rotation state in the twin clutch type transmission for a diesel railcar.

### DESCRIPTION OF REFERENCE NUMERAL

1 transmission
2 diesel engine
10 input shaft
30 odd-numbered gear-side shifting mechanism
32 odd-numbered gear-side transmission gear train
34 odd-numbered gear-side main clutch
36 odd-numbered gear-side synchronization gear train
38 odd-numbered gear-side synchronization clutch
40 odd-numbered gear-side transmission shaft
41 first shifting gear train
43 third shifting gear train
45 fifth shifting gear train
47 seventh shifting gear train
50, 52 odd-numbered gear-side mechanical clutch
60 even-numbered gear-side shifting mechanism
62 even-numbered gear-side transmission gear train
64 even-numbered gear-side main clutch
66 even-numbered gear-side synchronization gear train
68 even-numbered gear-side synchronization clutch
70 even-numbered gear-side transmission shaft 72 second shifting gear train
74 fourth shifting gear train
76 sixth shifting gear train
78 eighth shifting gear train
90 output mechanism
94 output shaft

### DETAILED DESCRIPTION OF THE PREFERRED EMBODIMENTS

Hereinafter, a description is given of a twin clutch type transmission (hereinafter referred to as a transmission) for a diesel railcar according to an exemplary embodiment of the present invention with reference to the drawings.

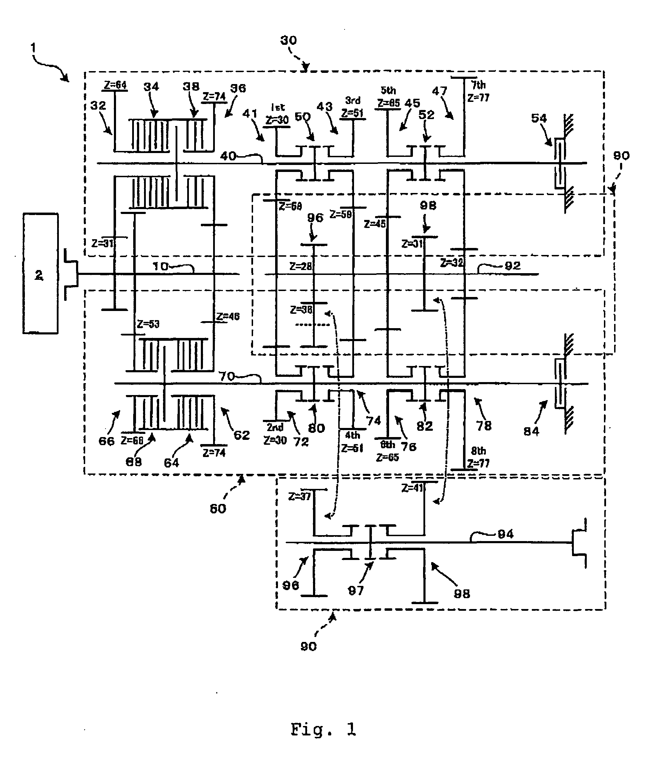

Fig. 1 shows the configuration of the transmission 1 of the present embodiment. This transmission 1 includes: an input shaft 10 to which the power of a diesel engine 2 is inputted; an odd-numbered gear-side shifting mechanism 30 to which the rotation of the input shaft 10 is transmitted; an even-numbered gear-side shifting mechanism 60 to which the rotation of the input shaft 10 is transmitted; and an output mechanism 90 to which the power of one of the odd-numbered gear-side shifting mechanism 30 and the even-numbered gear-side shifting mechanism 60 is selectively transmitted. The odd-numbered gear-side shifting mechanism 30 allows shifts from-to first shift gear, third shift gear, fifth shift gear, and seventh shift gear, and the even-numbered gear-side shifting mechanism 60 allows shifts from-to second shift gear, fourth shift gear, sixth shift gear, and eighth shift gear. Therefore, the transmission 1 has a total of eight shift gears. In the transmission 1, the odd-numbered gear-side shifting mechanism 30 and the even-numbered gear-side shifting mechanism 60 include respective clutches. Therefore, when the odd-numbered gear-side shifting mechanism 30, for example, is used to transmit the power, the even-numbered gear-side shifting mechanism 60 can prepare for an upshift or downshift to an adjacent shift gear. When the even-numbered gear-side shifting mechanism 60 is used to transmit the power, the odd-numbered gear-side shifting mechanism 30 can prepare for an upshift or downshift to an adjacent shift gear.

The odd-numbered gear-side shifting mechanism 30 includes: an odd-numbered gear-side transmission gear train 32 for transmitting the rotation of the input shaft 10; an odd-numbered gear-side main clutch 34 for selectively transmitting the power of the odd-numbered gear-side transmission gear train 32 to an odd-numbered gear-side transmission shaft 40; an odd-numbered gear-side synchronization gear train 36 for transmitting the rotation of the input shaft 10; an odd-numbered gear-side synchronization clutch 38 for selectively transmitting the power of the odd-numbered gear-side synchronization gear train 36 to the odd-numbered gear-side transmission shaft 40; odd-numbered gear-side (first, third, fifth, and seventh) shifting gear trains 41, 43, 45, and 47 that are provided for the odd-numbered gear-side transmission shaft 40 and transmit the rotation thereof to the output mechanism 90 at four different gear ratios; odd-numbered gear-side mechanical clutches 50 and 52 that selectively connect the odd-numbered gear-side transmission shaft 40 with one of the odd-numbered gear-side (first, third, fifth, and seventh) shifting gear trains 41, 43, 45, and 47; and an odd-numbered gear-side synchronization brake 54 disposed at one end of the odd-numbered gear-side transmission shaft 40.

The odd-numbered gear-side transmission gear train 32 includes a shift gear pair (the number of input gear teeth: 31, the number of output gear teeth: 64, speed ratio: 2.065). The odd-numbered gear-side transmission gear train 32 is disposed between the input shaft 10 and the odd-numbered gear-side main clutch 34, reduces the rotation of the input shaft 10, and transmits the reduced rotation to the odd-numbered gear-side main clutch 34. The odd-numbered gear-side main clutch 34 is a wet type multiple disc clutch and can selectively transmit the rotation of the input shaft 10 to the odd-numbered gear-side transmission shaft 40 through oil hydraulic action.

The odd-numbered gear-side synchronization gear train 36 includes a shift gear pair (the number of input gear teeth: 46, the number of output gear teeth: 74, speed ratio: 1.609). The odd-numbered gear-side synchronization gear train 36 is disposed between the input shaft 10 and the odd-numbered gear-side synchronization clutch 38, reduces the rotation of the input shaft 10, and transmits the reduced rotation to the odd-numbered gear-side synchronization clutch 38. The odd-numbered gear-side synchronization clutch 38 is a wet type multiple disc clutch and can selectively transmit the rotation of the input shaft 10 to the odd-numbered gear-side transmission shaft 40. The speed ratio (speed reduction ratio) of the odd-numbered gear-side synchronization gear train 36 is less than the speed ratio (speed reduction ratio) of the odd-numbered gear-side transmission gear train 32.

In the odd-numbered gear-side shifting mechanism 30, the odd-numbered gear-side main clutch 34 is used to selectively transmit the rotation of the input shaft 10 to the odd-numbered gear-side transmission shaft 40 at a speed ratio of 2.065. However, during synchronizing operation, the odd-numbered gear-side main clutch 34 is in a disengaged state. Therefore, when the odd-numbered gear-side synchronization clutch 38 is engaged, the rotation of the input shaft 10 can be transmitted to the odd-numbered gear-side transmission shaft 40 at a speed ratio of 1.609, which gives a higher rotation speed.

The first-gear shifting gear train 41 provided for the odd-numbered gear-side transmission shaft 40 includes a shift gear pair (the number of input gear teeth: 30, the number of output gear teeth: 58, speed ratio: 1,933) and transmits the rotation of the odd-numbered gear-side transmission shaft 40 to a counter shaft 92 of the output mechanism 90. The third-gear shifting gear train 43 includes a shift gear pair (the number of input gear teeth: 51, the number of output gear teeth: 59, speed ratio: 1.157) and transmits the rotation of the odd-numbered gear-side transmission shaft 40 to the counter shaft 92 of the output mechanism 90. The fifth-gear shifting gear train 45 includes a shift gear pair (the number of input gear teeth: 65, the number of output gear teeth: 45, speed ratio: 0.692) and transmits the rotation of the odd-numbered gear-side transmission shaft 40 to the counter shaft 92 of the output mechanism 90. The seventh-gear shifting gear train 47 includes a shift gear pair (the number of input gear teeth: 77, the number of output gear teeth: 32, speed ratio: 0.416) and transmits the rotation of the odd-numbered gear-side transmission shaft 40 to the counter shaft 92 of the output mechanism 90.

The odd-numbered gear-side mechanical clutch 50 is disposed between the first-gear shifting gear train 41 and the third-gear shifting gear train 43. This odd-numbered gear-side mechanical clutch 50 can selectively switch between a "first-gear connection state" in which the first-gear shifting gear train 41 is connected to the odd-numbered gear-side transmission shaft 40, a "third-gear connection state" in which the third-gear shifting gear train 43 is connected to the odd-numbered gear-side transmission shaft 40, and a "disconnected state" in which both the first- and third-gear shifting gear trains 41 and 43 are disconnected from the odd-numbered gear-side transmission shaft 40.

The odd-numbered gear-side mechanical clutch 52 is disposed between the fifth-gear shifting gear train 45 and the seventh-gear shifting gear train 47. This odd-numbered gear-side mechanical clutch 52 can selectively switch between a "fifth-gear connection state" in which the fifth-gear shifting gear train 45 is connected to the odd-numbered gear-side transmission shaft 40, a "seventh-gear connection state" in which the seventh-gear shifting gear train 47 is connected to the odd-numbered gear-side transmission shaft 40, and a "disconnected state" in which both the fifth- and seventh-gear shifting gear trains 45 and 47 are disconnected from the odd-numbered gear-side transmission shaft 40. Therefore, any one of the first, third, fifth, and seventh gears and neutral can be appropriately selected by appropriately engaging and disengaging the odd-numbered gear-side mechanical clutches 50 and 52. Although the detail will be described later, the odd-numbered gear-side synchronization brake 54 damps the rotation of the odd-numbered gear-side transmission shaft 40 to facilitate the synchronization operation.

The output mechanism 90 includes: the counter shaft 92; an output shaft 94; a forward rotation gear train 96 disposed between the counter shaft 92 and the output shaft 94; a reverse rotation gear train 98 disposed similarly between the counter shaft 92 and the output shaft 94: and a forward-reverse selecting mechanical clutch 97 disposed on the output shaft 94 between the forward rotation gear train 96 and the reverse rotation gear train 98.

The forward rotation gear train 96 includes three gears, i.e., a pair of gears and an idler gear disposed therebetween (the number of input gear teeth: 28, the number of idler gear teeth: 36, the number of output gear teeth: 37, total speed ratio: 1.321). Therefore, the rotation of the counter shaft 92 is transmitted to the output shaft 94 at the above speed ratio, and the counter shaft 92 and the output shaft 94 rotate in the same direction. The reverse rotation gear train 98 includes a shift gear pair (the number of input gear teeth: 31, the number of output gear teeth: 41, speed ratio: 1.323) and transmits the rotation of the counter shaft 92 to the output shaft 94. With the reverse rotation gear train 98, the counter shaft 92 and the output shaft 94 rotate in opposite directions. The speed ratio in the forward rotation direction and the speed ratio in the reverse rotation direction are set so as to be substantially the same.

The forward-reverse selecting mechanical clutch 97 selectively switches between a "forward rotation connection state" in which the forward rotation gear train 96 is connected to the output shaft 94, a "reverse rotation connection state" in which the reverse rotation gear train 98 is connected to the output shaft 94, and a "disconnected state" in which both the forward and reverse rotation gear trains 96 and 98 are disconnected from the odd-numbered gear-side transmission shaft 40. Accordingly, by simply switching between forward rotation and reverse rotation, eight forward gears and eight reverse gears can be shifted under substantially the same conditions. Therefore, the transmission 1 can be used for diesel railcars in which the frequency of forward operation and the frequency of reverse operation are substantially the same.

The even-numbered gear-side shifting mechanism 60 includes: an even-numbered gear-side transmission gear train 62 for transmitting the rotation of the input shaft 10; an even-numbered gear-side main clutch 64 for selectively transmitting the power of the even-numbered gear-side transmission gear train 62 to an even-numbered gear-side transmission shaft 70; an even-numbered gear-side synchronization gear train 66 for transmitting the rotation of the input shaft 10; an even-numbered gear-side synchronization clutch 68 for selectively transmitting the power of the even-numbered gear-side synchronization gear train 66 to the even-numbered gear-side transmission shaft 70; even-numbered gear-side (second, fourth, sixth, and eighth) shifting gear trains 72, 74, 76, and 78 that are provided for the even-numbered gear-side transmission shaft 70 and transmit the rotation thereof to the output mechanism 90 at four different gear ratios; even-numbered gear-side mechanical clutches 80 and 82 that selectively connect the even-numbered gear-side transmission shaft 70 with one of the even-numbered gear-side (second, fourth, sixth, and eighth) shifting gear trains 72, 74, 76, and 78; and an even-numbered gear-side synchronization brake 84 disposed at one end of the even-numbered gear-side transmission shaft 70.

The even-numbered gear-side transmission gear train 62 includes a shift gear pair (the number of input gear teeth: 46, the number of output gear teeth: 74, speed ratio: 1.609). The input-side gear of this gear pair is used also as that of the gear pair of the odd-numbered gear-side synchronization gear train 36 in the odd-numbered gear-side shifting mechanism 30. The speed ratio of the even-numbered gear-side transmission gear train 62 and the speed ratio of the odd-numbered gear-side synchronization gear train 36 are set to be substantially the same (completely the same in the present embodiment).

The even-numbered gear-side transmission gear train 62 is disposed between the input shaft 10 and the even-numbered gear-side main clutch 64, reduces the rotation of the input shaft 10, and transmits the reduced rotation to the even-numbered gear-side main clutch 64. The even-numbered gear-side main clutch 64 is a wet type multiple disc clutch and can selectively transmit the rotation of the input shaft 10 to the even-numbered gear-side transmission shaft 70.

The even-numbered gear-side synchronization gear train 66 includes a shift gear pair (the number of input gear teeth: 53, the number of output gear teeth: 66, speed ratio: 1.245). This even-numbered gear-side synchronization gear train 66 is disposed between the input shaft 10 and the even-numbered gear-side synchronization clutch 68, reduces the rotation of the input shaft 10, and transmits the reduced rotation to the even-numbered gear-side synchronization clutch 68. The even-numbered gear-side synchronization clutch 68 is a wet type multiple disc clutch and can selectively transmit the rotation of the input shaft 10 to the even-numbered gear-side transmission shaft 70.

The even-numbered gear-side shifting mechanism 60 is configured such that, in steady operation, the even-numbered gear-side main clutch 64 is used to selectively transmit the rotation of the input shaft 10 to the even-numbered gear-side transmission shaft 70 at a speed ratio of 1.609. During synchronization operation, the even-numbered gear-side synchronization clutch 68 is used preferentially so that the rotation of the input shaft 10 can be transmitted to the even-numbered gear-side transmission shaft 70 at a speed ratio of 1.245, which gives a higher rotation speed.

The second-gear shifting gear train 72 provided for the even-numbered gear-side transmission shaft 70 includes a shift gear pair (the number of input gear teeth: 30, the number of output gear teeth: 58, speed ratio: 1.933) and transmits the rotation of the even-numbered gear-side transmission shaft 70 to the counter shaft 92 of the output mechanism 90. The output-side gear of the above gear pair is used also as that of the gear pair of the first-gear shifting gear train 41 of the odd-numbered gear-side shifting mechanism 30. The speed ratio of the second-gear shifting gear train 72 and the speed ratio of the first-gear shifting gear train 41 are set to be substantially the same (completely the same in the present embodiment). In the present embodiment, identical gears are used for the second-gear shifting gear train 72 and the first-gear shifting gear train 41. Therefore, in the transmission 1 as a whole, the ratio between the input-output speed ratio in first gear and the input-output speed ratio in second gear is the same as the ratio between the speed ratio of the odd-numbered gear-side transmission gear train 32 and the speed ratio of the even-numbered gear-side transmission gear train 62.

The fourth-gear shifting gear train 74 includes a shift gear pair (the number of input gear teeth: 51, the number of output gear teeth: 59, speed ratio: 1.157) and transmits the rotation of the even-numbered gear-side transmission shaft 70 to the counter shaft 92 of the output mechanism 90. The output-side gear of the above gear pair is used also as that of the gear pair of the third-gear shifting gear train 43 of the odd-numbered gear-side shifting mechanism 30. The speed ratio of the fourth-gear shifting gear train 74 and the speed ratio of the third-gear shifting gear train 43 are set to be substantially the same (completely the same in the present embodiment). In the present embodiment, identical gears are used for the fourth-gear shifting gear train 74 and the third-gear shifting gear train 43. Therefore, in the transmission 1 as a whole, the inter-gear ratio between the input-output speed ratio in third gear and the input-output speed ratio in fourth gear is the same as the ratio between the speed ratio of the odd-numbered gear-side transmission gear train 32 and the speed ratio of the even-numbered gear-side transmission gear train 62.

The sixth-gear shifting gear train 76 includes a shift gear pair (the number of input gear teeth: 65, the number of output gear teeth: 45, speed ratio: 0.692) and transmits the rotation of the even-numbered gear-side transmission shaft 70 to the counter shaft 92 of the output mechanism 90. The output-side gear of the above gear pair is used also as that of the gear pair of the fifth-gear shifting gear train 45 of the odd-numbered gear-side shifting mechanism 30. The speed ratio of the sixth-gear shifting gear train 76 and the speed ratio of the fifth-gear shifting gear train 45 are set to be substantially the same (completely the same in the present embodiment). In the present embodiment, identical gears are used for the sixth-gear shifting gear train 76 and the fifth-gear shifting gear train 45. Therefore, in the transmission 1 as a whole, the inter-gear ratio between the input-output speed ratio in fifth gear and the input-output speed ratio in sixth gear is the same as the ratio between the speed ratio of the odd-numbered gear-side transmission gear train 32 and the speed ratio of the even-numbered gear-side transmission gear train 62.

The eighth-gear shifting gear train 78 includes a shift gear pair (the number of input gear teeth: 77, the number of output gear teeth: 32, speed ratio: 0.416) and transmits the rotation of the even-numbered gear-side transmission shaft 70 to the counter shaft 92 of the output mechanism 90. The output-side gear of the above gear pair is used also as that of the gear pair of the seventh-gear shifting gear train 47 of the odd-numbered gear-side shifting mechanism 30. The speed ratio of the eighth-gear shifting gear train 78 and the speed ratio of the seventh-gear shifting gear train 47 are set to be substantially the same (completely the same in the present embodiment) . In the present embodiment, identical gears are used for the eighth-gear shifting gear train 78 and the seventh-gear shifting gear train, 47. Therefore, in the transmission 1 as a whole, the inter-gear ratio between the input-output speed ratio in seventh gear and the input-output speed ratio in eighth gear is the same as the ratio between the speed ratio of the odd-numbered gear-side transmission gear train 32 and the speed ratio of the even-numbered gear-side transmission gear train 62.

The even-numbered gear-side mechanical clutch 80 is disposed between the second-gear shifting gear train 72 and the fourth-gear shifting gear train 74. The even-numbered gear-side mechanical clutch 80 can selectively switch between a "second-gear connection state" in which the second-gear shifting gear train 72 is connected to the even-numbered gear-side transmission shaft 70, a "fourth-gear connection state" in which the fourth-gear shifting gear train 74 is connected to the even-numbered gear-side transmission shaft 70, and a "disconnected state" in which both the second- and fourth-gear shifting gear trains 72 and 74 are disconnected from the even-numbered gear-side transmission shaft 70.

The even-numbered gear-side mechanical clutch 82 is disposed between the sixth-gear shifting gear train 76 and the eighth-gear shifting gear train 78. The even-numbered gear-side mechanical clutch 82 can selectively switch between a "sixth-gear connection state" in which the sixth-gear shifting gear train 76 is connected to the even-numbered gear-side transmission shaft 70, an "eighth-gear connection state" in which the eighth-gear shifting gear train 78 is connected to the even-numbered gear-side transmission shaft 70, and a "disconnected state" in which both the sixth- and eighth-gear shifting gear trains 76 and 78 are disconnected from the even-numbered gear-side transmission shaft 70. Therefore, any one of the second, fourth, sixth, and eighth gears and neutral can be appropriately selected by appropriately engaging and disengaging the even-numbered gear-side mechanical clutches 80 and 82. Although the detail will be described later, the even-numbered gear-side synchronization brake 84 damps the rotation of the even-numbered gear-side transmission shaft 70 to facilitate the synchronization operation.

The speed ratios in first to eight forward and reverse gears of the transmission 1 configured as described above are listed in table 1.

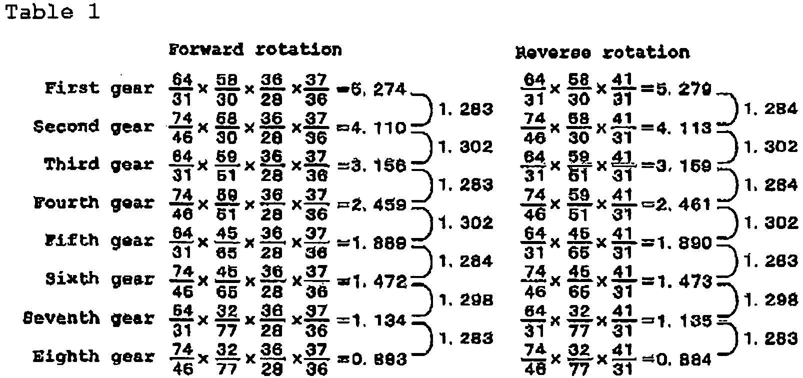

As also can be seen from Table 1, in the transmission 1, the inter-gear ratios between adjacent shift gears are set to be substantially constant (1.28 to 1.30, about 1.29). The inter-gear ratio (about 1.29) is substantially the same as the ratio between the speed ratio of the odd-numbered gear-side transmission gear train 32 (2.065) and the speed ratio of the even-numbered gear-side transmission gear train 62 (1.609) (2.065/1.609 = 1.283).

Moreover, in the transmission 1, the speed ratio of the odd-numbered gear-side synchronization gear train 36 (1.609) is set to a value obtained by dividing the speed ratio of the odd-numbered gear-side transmission gear train 32 (2.065) by the inter-gear ratio (about 1.29). Similarly, the speed ratio of the even-numbered gear-side synchronization gear train 66 (1.245) is set to a value obtained by dividing the speed ratio of the even-numbered gear-side transmission gear train 62 (1.609) by the inter-gear ratio (about 1.29). Although the detail will be described later, by setting the speed ratios as described above, smooth synchronization control during shifts using the synchronization gear trains 36 and 66 and the synchronization clutches 38 and 68 can be achieved.

Next, a description is given of the shifting operation of the transmission 1. In the following description, it is assumed that the diesel engine 2 rotates the input shaft 10 at 1,000 revolutions per minute (rpm).

### <Start of driving in first shift gear from stop >

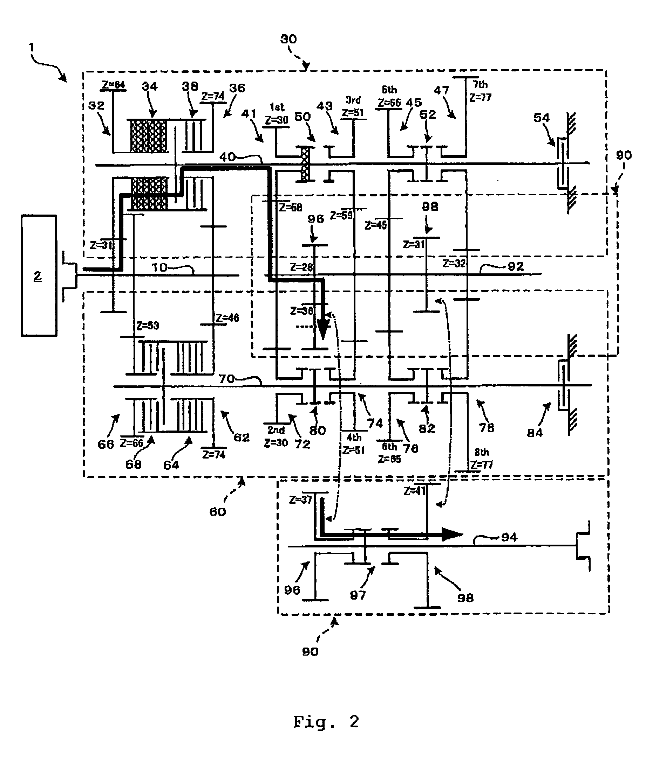

As shown in Fig. 2, first, with the odd-numbered gear-side mechanical clutch 50 held in the "first-gear connection state," the odd-numbered gear-side main clutch 34 used instead of a torque convertor is gradually brought into engagement by way of a half-clutch (slipping) state, so that the rotation of the input shaft 10 is transmitted to the odd-numbered gear-side transmission shaft 40 through the odd-numbered gear-side transmission gear train 32. Then the odd-numbered gear-side transmission shaft 40 rotates at about 484 rpm. The rotation of the odd-numbered gear-side transmission shaft 40 is transmitted to the counter shaft 92 through the first-gear shifting gear train 41, and the counter shaft 92 is thereby rotated at 251 rpm. The rotation of the counter shaft 92 is transmitted to the output shaft 94 through the forward rotation gear train 96.

### <Preparation for shift to second shift gear during driving in first shift gear>

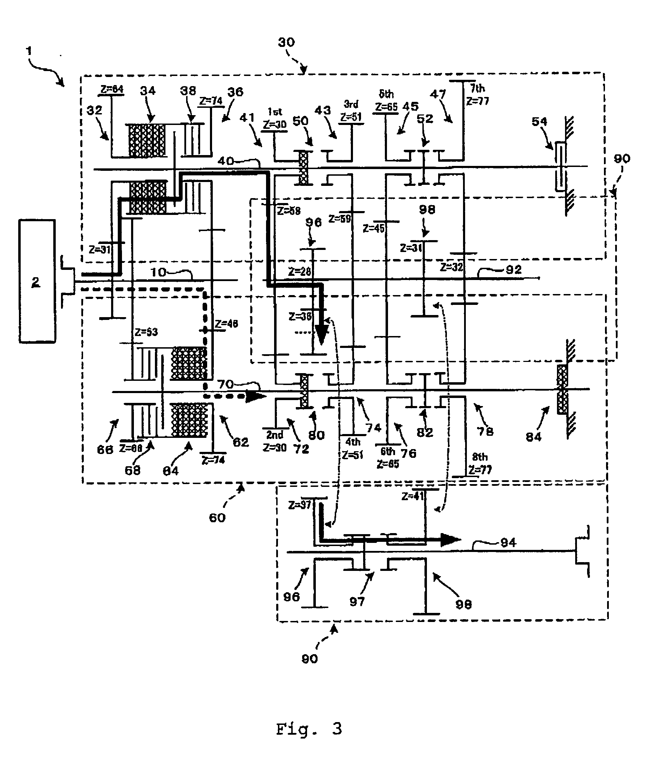

During driving in first shift gear, the input gear of the second-gear shifting gear train 72 of the even-numbered gear-side shifting mechanism 60 (the input gear on the even-numbered gear-side transmission shaft 70 side) is rotated, similarly to the input gear of the first-gear shifting gear train 41, at 484 rpm. In this state, the even-numbered gear-side main clutch 64 is engaged partway to transmit the rotation of the even-numbered gear-side transmission gear train 62 to the even-numbered gear-side transmission shaft 70, as shown in Fig. 3. Since the speed ratio of the even-numbered gear-side transmission gear train 62 is 1.609, the rotation speed of the even-numbered gear-side transmission shaft 70 can be increased to a maximum of 622 rpm. However, at this point, the even-numbered gear-side main clutch 64 is engaged partway, and the even-numbered gear-side synchronization brake 84 is actuated to control the rotation speed of the even-numbered gear-side transmission shaft 70 to about 484 rpm. Therefore, the rotation of the even-numbered gear-side transmission shaft 70 is synchronized with the rotation of the second-gear shifting gear train 72, so that the even-numbered gear-side mechanical clutch 80 can be engaged to achieve the "second-gear connection state." In this manner, the preparation for a shift to second gear is completed.

### <Upshift from first shift gear to second shift gear>

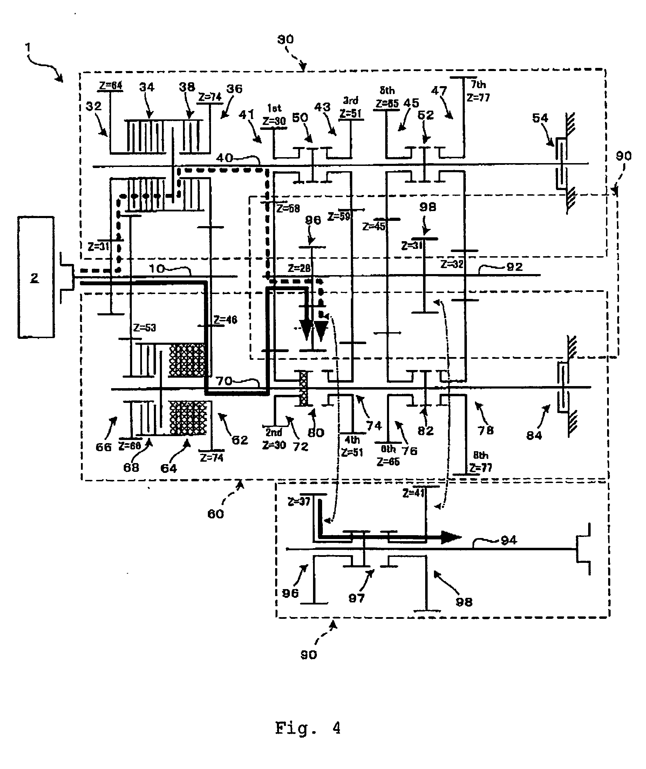

To shift to second shift gear, the even-numbered gear-side synchronization brake 84 is released, and the even-numbered gear-side main clutch 64 is fully engaged, as shown in Fig. 4. At the same time with the above operation, the odd-numbered gear-side main clutch 34 is brought into the "disconnected state" so that the rotation of the odd-numbered gear-side transmission shaft 40 is not transmitted to the counter shaft 92. Then the rotation speed of the even-numbered gear-side transmission shaft 70 increases from 484 rpm in the half-clutch state to 622 rpm, and the rotation speed of the counter shaft 92 increases to 321 rpm. In this manner, an upshift to second shift gear is completed. To prepare for a next shift, the odd-numbered gear-side mechanical clutch 50 is brought into the "disconnected state" during driving in second shift gear.

### <Preparation for shift to third shift gear during driving in second shift gear>

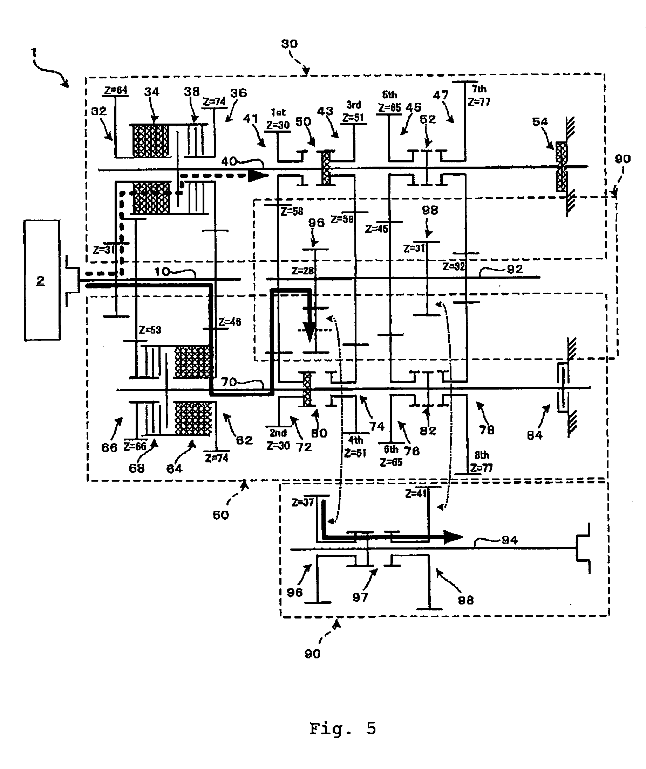

During driving in second shift gear, the input gear of the third-gear shifting gear train 43 of the odd-numbered gear-side shifting mechanism 30 (the input gear on the odd-numbered gear-side transmission shaft 40 side) is rotated at 371 rpm, which is determined by the speed ratio of the third-gear shifting gear train 43. In this state, the odd-numbered gear-side main clutch 34 is engaged partway to transmit the rotation of the odd-numbered gear-side transmission gear train 32 to the odd-numbered gear-side transmission shaft 40, as shown in Fig. 5. Since the speed ratio of the odd-numbered gear-side transmission gear train 32 is 2.065, the odd-numbered gear-side transmission shaft 40 can be rotated at a maximum of 484 rpm. However, at this point, the odd-numbered gear-side main clutch 34 is engaged partway, and the odd-numbered gear-side synchronization brake 54 is actuated to control the rotation speed of the odd-numbered gear-side transmission shaft 40 to about 371 rpm. Therefore, the rotation of the odd-numbered gear-side transmission shaft 40 is synchronized with the rotation of the third-gear shifting gear train 43, so that the odd-numbered gear-side mechanical clutch 50 can be engaged to achieve the "third-gear connection state." In this manner, the preparation for a shift to third shift gear is completed.

### <Upshift from second shift gear to third shift gear>

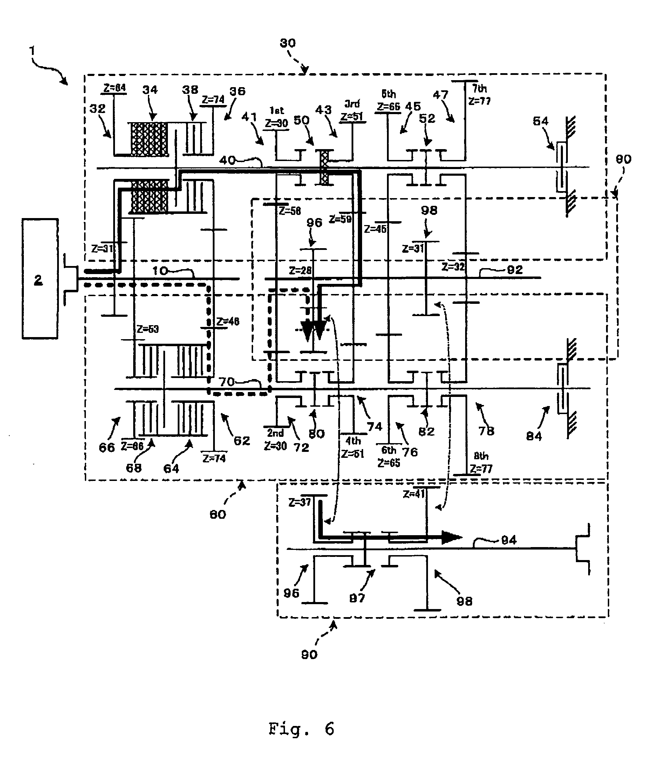

To shift to third shift gear, the odd-numbered gear-side synchronization brake 54 is released, and the odd-numbered gear-side main clutch 34 is fully engaged, as shown in Fig. 6. At the same time with the above operation, the even-numbered gear-side main clutch 64 is brought into the "disconnected state" so that the rotation of the even-numbered gear-side transmission shaft 70 is not transmitted to the counter shaft 92. Then the rotation speed of the odd-numbered gear-side transmission shaft 40 increases from 371 rpm in the half-clutch state to 484 rpm, and the rotation speed of the counter shaft 92 increases to 418 rpm. In this manner, an upshift to third shift gear is completed. To prepare for a next shift, the even-numbered gear-side mechanical clutch 80 is brought into the "disconnected state" during driving in third shift gear. Upshifts to fourth and higher gears are carried out in a similar manner.

### <Preparation for shift to second shift gear during driving in third shift gear>

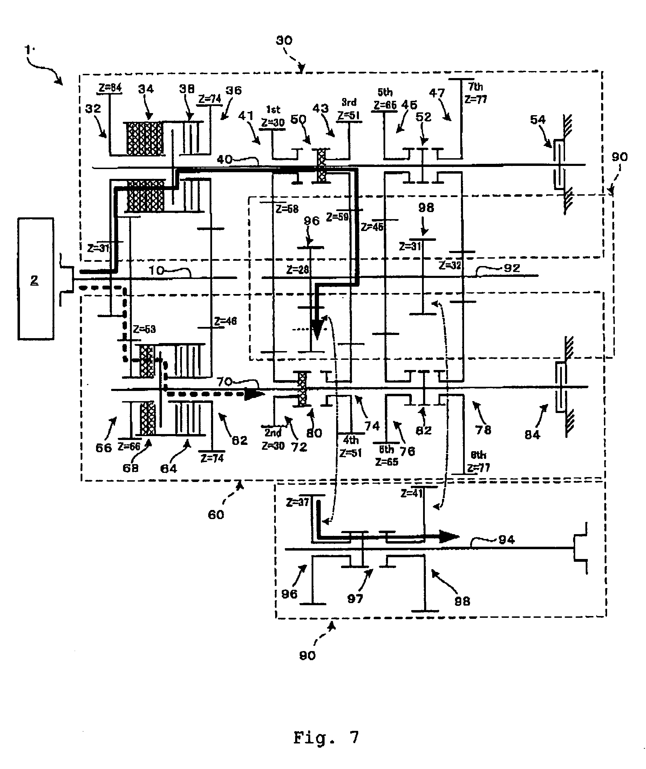

To prepare for a downshift from third shift gear to second shift gear, first, the second-gear shifting gear train 72 is connected to the even-numbered gear-side transmission shaft 70. More specifically, during driving in third shift gear, the rotation speed of the counter shaft 92 is 418 rpm, and therefore the even-numbered gear-side transmission shaft 70-side gear of the second-gear shifting gear train 72 of the even-numbered gear-side shifting mechanism 60 is rotated at 808 rpm. Therefore, as shown in Fig. 7, the even-numbered gear-side synchronization clutch 68 is fully engaged to transmit the rotation of the even-numbered gear-side synchronization gear train 66 to the even-numbered gear-side transmission shaft 70. Since the speed ratio of the even-numbered gear-side synchronization gear train 66 is 1.245, the rotation speed of the even-numbered gear-side transmission shaft 70 can be increased to 803 rpm. Therefore, the rotation of the even-numbered gear-side transmission shaft 70 is substantially synchronized with the rotation of the second-gear shifting gear train 72, so that the even-numbered gear-side mechanical clutch 80 can be engaged to achieve the "second-gear connection state." In this manner, the preparation for a downshift to second shift gear is completed.

### <Downshift from third shift gear to second shift gear>

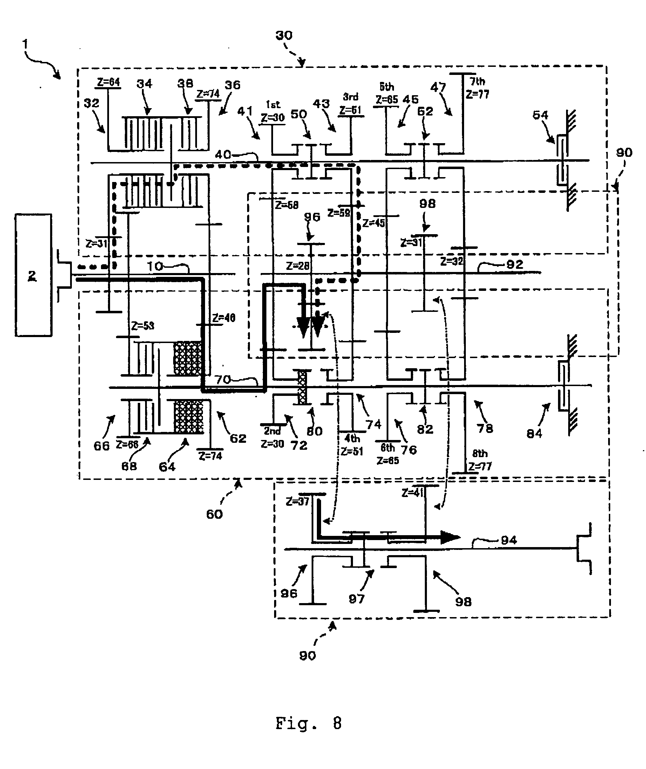

To shift down to second shift gear, the engagement of the even-numbered gear-side synchronization clutch 68 is gradually released, and the even-numbered gear-side main clutch 64 is gradually brought into full engagement, as shown in Fig. 8. At the same time with this operation, the odd-numbered gear-side main clutch 34 is brought into the "disconnected state" so that the rotation of the odd-numbered gear-side transmission shaft 40 is not transmitted to the counter shaft 92. The rotation speed of the even-numbered gear-side transmission shaft 70 is thereby decreased from 803 rpm to 622 rpm, and the rotation speed of the counter shaft 92 is decreased to 321 rpm. In this manner, a downshift to second shift gear is completed. To prepare for a next shift, the odd-numbered gear-side mechanical clutch 50 is brought into the "disconnected state" during driving in second shift gear.

### <Preparation for shift to first shift gear during driving in second shift gear>

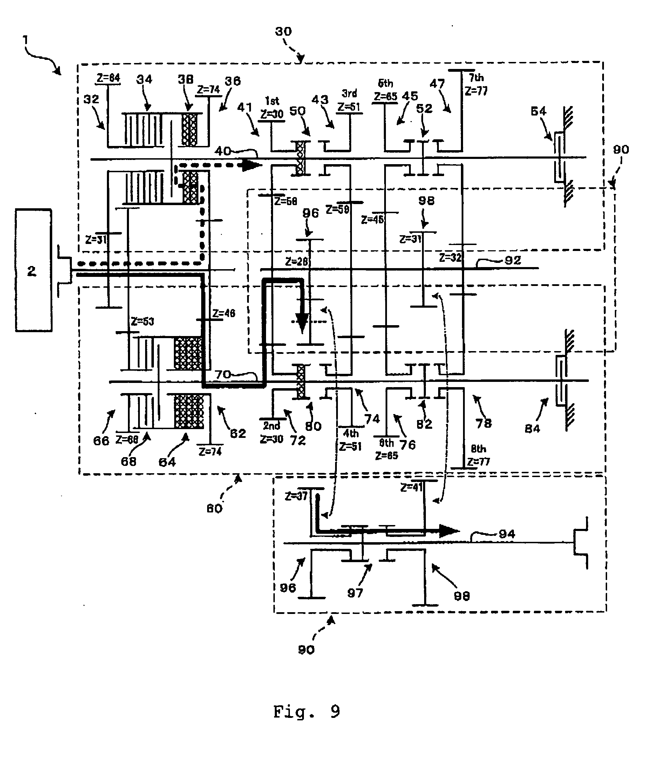

To prepare for a downshift from second shift gear to first shift gear, the first-gear shifting gear train 41 is connected to the odd-numbered gear-side transmission shaft 40. More specifically, during driving in second shift gear, the rotation speed of the counter shaft 92 is 321 rpm, and therefore the odd-numbered gear-side transmission shaft 40-side gear of the first-gear shifting gear train 41 of the odd-numbered gear-side shifting mechanism 30 is rotated at 622 rpm. Therefore, as shown in Fig. 9, the odd-numbered gear-side synchronization clutch 38 is fully engaged to transmit the rotation of the odd-numbered gear-side synchronization gear train 36 to the odd-numbered gear-side transmission shaft 40. Since the speed ratio of the odd-numbered gear-side synchronization gear train 36 is 1.609, the rotation speed of the odd-numbered gear-side transmission shaft 40 can be increased to 622 rpm. Therefore, the rotation of the odd-numbered gear-side transmission shaft 40 is substantially synchronized with the rotation of the first-gear shifting gear train 41, so that the odd-numbered gear-side mechanical clutch 50 can be engaged to achieve the "first-gear connection state." In this manner, the preparation for a downshift to first shift gear is completed.

### <Downshift from second shift gear to first shift gear>

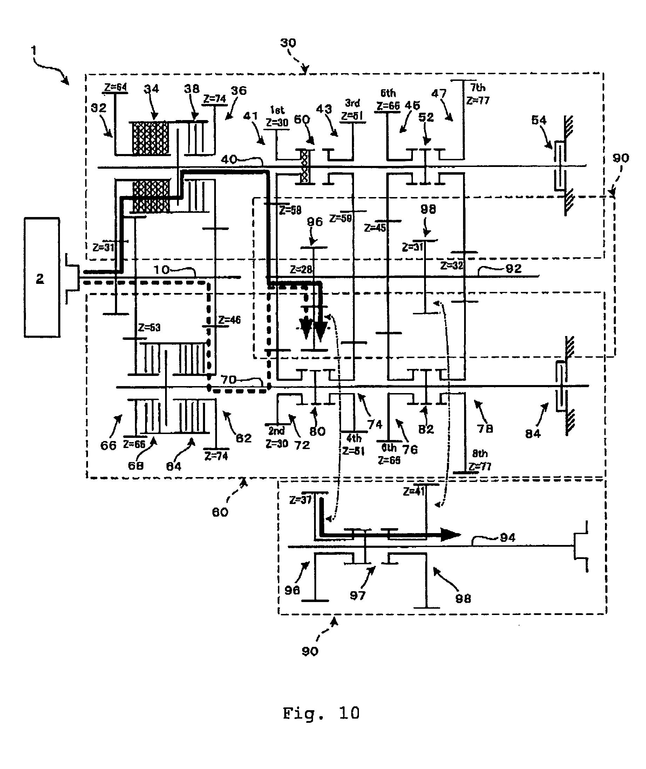

To shift down to first shift gear, the engagement of the odd-numbered gear-side synchronization clutch 38 is gradually released, and the odd-numbered gear-side main clutch 34 is gradually brought into full engagement, as shown in Fig. 10. At the same time with this operation, the even-numbered gear-side main clutch 64 is brought into the "disconnected state" so that the rotation of the even-numbered gear-side transmission shaft 70 is not transmitted to the counter shaft 92. The rotation speed of the odd-numbered gear-side transmission shaft 40 is thereby decreased from 622 rpm to 484 rpm, and the rotation speed of the counter shaft 92 is decreased to 251 rpm. In this manner, a downshift to first shift gear is completed. To prepare for a next shift, the even-numbered gear-side mechanical clutch 80 is brought into the "disconnected state" during driving in second shift gear.

In the transmission 1 of the present embodiment described above, the odd-numbered gear-side shifting mechanism 30 and the even-numbered gear-side shifting mechanism 60 include the main clutches 34 and 64 and the synchronization clutches 38 and 68, respectively. Therefore, in the operation of preparing for a shift to an adjacent shift gear, when the shift gear is shifted down, the rotation speed of the transmission shaft 40 or 70 is temporarily changed using the synchronization clutch 38 or 68 on the preparation side so that the rotation of the transmission shaft 40 or 70 can be temporarily synchronized with the rotation of a target transmission gear train. It should be noted that the target transmission gear train can be connected to the transmission shaft 40 or 70 using a mechanical clutch, without using a wet type multiple disc clutch to which relative slipping is inherent. The idling loss of mechanical clutches is significantly less than that of wet type multiple disc clutches, and the use of such mechanical clutches significantly improves the transmission efficiency during operation.

In the transmission 1 of the present embodiment, the odd-numbered gear-side transmission shaft 40 and the even-numbered gear-side transmission shaft 70 include the synchronization brakes 54 and 84, respectively. Therefore, in the operation of preparing for a shift to an adjacent shift gear, when the shift gear is shifted up, the synchronization brake 54 or 84 is actuated while the main clutch 34 or 64 on the preparation side is held in a half-clutch state. By balancing these actions, the transmission shaft 40 or 70 can be controlled to rotate at any desired speed. Accordingly, the rotation of the transmission shaft 40 or 70 can be synchronized with the rotation of a target transmission gear train ready for the shift. It should be noted that the transmission shaft 40 or 70 can be connected to the target transmission gear train using a mechanical clutch.

In the transmission 1 of the present embodiment, when the shift gear is shifted up, the main clutch 34 or 64 and the synchronization brake 54 or 84 are used in combination to temporarily reduce the rotation speed of the transmission shaft 40 or 70 on the preparation side from its original rotation speed so that the rotation of the transmission shaft 40 or 70 is synchronized with the rotation of the target transmission gear train. Then the transmission shafts 40 or 70 is connected to the target transmission gear train through the mechanical clutch, and the rotation speed of the transmission shaft 40 or 70 is increased to its original rotation speed, whereby the upshift is completed. The synchronization clutches 38 and 68 form transmission routes having speed ratios less than those formed by the main clutches 34 and 64 (the smaller the speed ratio, the greater the rotation speed of the transmission shafts 40 and 70). Therefore, when the shift gear is shifted down, the synchronization clutch 38 or 68 is used to temporarily increase the rotation speed of the transmission shaft 40 or 70 on the preparation side so that the rotation of the transmission shaft 40 or 70 is synchronized with the rotation of a target transmission gear train. Then the transmission shaft 40 or 70 is connected to the target transmission gear train through the mechanical clutch. Next, the engagement of the synchronization clutch 38 or 68 is released, and the engagement of the main clutch 34 or 36 is established, whereby the downshift is completed. As described above, when a shift gear is shifted up, the synchronization brake 54 or 84 and the main clutch 34 or 64 are used in combination. In this operation, the main clutch 34 or 64 is effectively used to carry out the preparation on the adjacent higher gear side. When a shift gear is shifted down, the synchronization clutch 38 or 68, which can temporarily increase the rotation speed of the transmission shaft 40 or 70, is used to carry out the preparation smoothly on the adjacent lower gear. Therefore, the structure of the transmission 1 is simplified. This allows the transmission 1 to be made compact, and the synchronization control system can be simplified. In particular, when a shift gear is shifted down, the synchronization of rotation speeds is ensured by temporarily increasing the rotation speed of the transmission shaft 40 or 70 mechanically using the synchronization clutch 38 or 68 and the synchronization gear train 36 or 66. Therefore, it is not necessary to temporarily increase the rotation speed of the diesel engine 2 for the purpose of synchronization, and therefore the noise of the diesel engine 2 is reduced. Moreover, this can synergistically improve the fuel consumption and the durability of the diesel engine 2 and the transmission 1.

In the transmission 1 of the present embodiment, the gear ratios of adjacent shifting gear trains are set to be substantially the same, as in, for example, the first-gear shifting gear train 41 and the second-gear shifting gear train 72. Therefore, identical gears can be used for the first-gear shifting gear train 41 and the second-gear shifting gear train 72, and the first-gear shifting gear train 41 and the second-gear shifting gear train 72 can share the use of a shift gear on the counter shaft 92. Although the transmission 1 is an eight-gear transmission, the shared use of shift gears allows the transmission 1 to be reduced in size. More specifically, the axial size of the transmission 1 is substantially equal to that of a four-gear transmission. Accordingly, the size of the transmission 1 can be significantly reduced.

As listed in Table 1, in the transmission 1 of the present embodiment, the inter-gear ratios between first to eighth gears are set to be substantially the same (about 1.29). Therefore, for example, the synchronization control for all the odd gears during downshifts can be carried out using one synchronization clutch 38 and one synchronization gear train 36. Accordingly, in the transmission 1, the number of synchronization clutches 38 or 68 and the number of synchronization gear trains 36 or 66 can be reduced. For example, in a conventional mechanical transmission, a synchronization unit such as synchromesh must be provided for each gear. In the transmission 1 of the present embodiment, only one synchronization clutch and only one synchronization gear train are provided for each of the odd-numbered gear side and the even-numbered gear side. However, this configuration allows the synchronization control for all the shift gears during the downshift operation. Therefore, the structure of the transmission can be simplified, and the size of the transmission can be reduced.

In the present embodiment, the ratio of the rotation speed of the even-numbered gear-side transmission shaft 70 to the rotation speed of the odd-numbered gear-side transmission shaft 40, i.e., the ratio of the speed ratio of the odd-numbered gear-side transmission gear train 32 to the speed ratio of the even-numbered gear-side transmission gear train 62, is substantially the same as the inter-gear ratio (1.29). Therefore, as described above, this allows the gear ratios of adjacent shifting gear trains to be set to be substantially the same, as in, for example, the gear ratio of the first-gear shifting gear train 41 and the gear ratio of the second-gear shifting gear train 72. This is because the target inter-gear ratio can be ensured by the ratio between the rotation speed of the odd-numbered gear-side transmission gear train 32 and the rotation speed of the even-numbered gear-side transmission gear train 62, which is equal to the inter-gear speed ratio. The ratio between the gear ratio of the second-gear shifting gear train 72 and the gear ratio of the third-gear shifting gear train 43 is set to 1.66, which is substantially the same as the square of the inter-gear ratio (1.29).

In this transmission 1, the gear ratio of the odd-numbered gear-side synchronization gear train 36 is set to a value obtained by dividing the gear ratio of the odd-numbered gear-side transmission gear train 32 by the inter-gear ratio. In addition, the gear ratio of the even-numbered gear-side synchronization gear train 66 is set to a value obtained by dividing the gear ratio of the even-numbered gear-side transmission gear train 62 by the inter-gear ratio. With this configuration, for example, when a shift gear is shifted down to the next lower gear, the rotation speed of the transmission shaft 40 or 70 on the preparation side can be temporarily increased by an amount substantially corresponding to the inter-gear ratio by connecting it with the synchronization gear train 36 or 66 through the synchronization clutch 38 or 68. More specifically, the synchronization clutch 38 or 68 allows the transmission shaft 40 or 70 on the preparation side to rotate at substantially the same rotation speed as that of the transmission shaft 40 or 70 on the higher gear side (driving side). Therefore, the transmission shaft 40 or 70 on the preparation side can be synchronized with an idle transmission gear train on the preparation side. By setting the speed ratios between the synchronization clutch 38 and 68 as described above, the odd-numbered gear-side synchronization gear train 36 and the even-numbered gear-side transmission gear train 62 have substantially the same gear ratio accordingly. The odd-numbered gear-side synchronization gear train 36 and the even-numbered gear-side transmission gear train 62 can share the use of a gear on the input shaft 10 side. Therefore, the odd-numbered gear-side synchronization gear train 36 can be efficiently installed, so that the size of the transmission 1 can be further reduced.

In the transmission 1 of the present embodiment, the need for the use of a torque convertor is eliminated. Therefore, the transmission loss during low-speed operation due to the use of a torque convertor can be avoided, so that the transmission efficiency can be improved. When a torque convertor is used and locked up during high-speed operation, the oil inside the convertor can impinge on the blades to cause internal loss. However, in the transmission 1 of the present embodiment, since the need for the use of a torque convertor is eliminated, the transmission efficiency during high-speed operation can be improved. Moreover, only four wet type multiple disc clutches (the main clutches 34 and 64 and the synchronization clutches 38 and 68) are used in the transmission 1. Even if these wet type multiple disc clutches are in the "disconnected state," since relative rotation speed difference thereof is small, the idling loss can be reduced. Therefore, the transmission efficiency can be further improved. In addition, heat generation from the wet type multiple disc clutches is suppressed, so that the need for the use of a radiator for cooling oil can be eliminated. This leads to an improvement in the durability of each wet type multiple disc clutch.

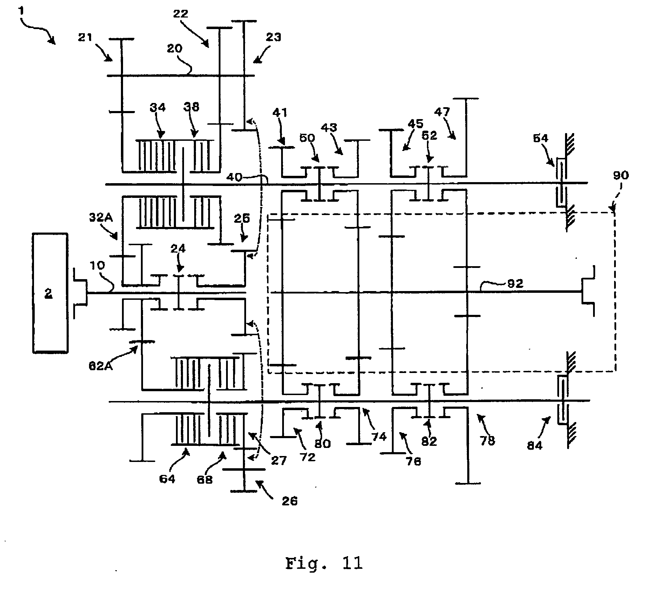

In the transmission 1 of the present embodiment described above, the mechanism for switching between forward rotation and reverse rotation is disposed in the output mechanism 90, but the present invention is not limited thereto. For example, in a transmission 1 shown in Fig. 11, a mechanism for switching between forward rotation and reverse rotation is disposed on the input shaft 10 side. More specifically, this transmission 1 includes: an odd-numbered gear-side transmission gear train 32A and an even-numbered gear-side transmission gear train 62A that are disposed so as to be coaxial with the input shaft 10; a reverse rotation-side main gear 25 disposed so as to be coaxial with the input shaft 10; and a forward-reverse rotation selecting mechanical clutch 24 disposed on the input shaft 10. The forward-reverse rotation selecting mechanical clutch 24 can select one of a "forward rotation state" in which the odd-numbered gear-side transmission gear train 32A and the even-numbered gear-side transmission gear train 62A are connected to the input shaft 10 and a "reverse rotation state" in which the reverse rotation-side main gear 25 is connected to the input shaft 10.

This transmission 1 further includes: a reverse rotation-side idler gear 26 that engages the reverse rotation-side main gear 25; an even-numbered gear-side synchronization gear 27 that engages the idler gear 26 to transmit the rotation thereof to the even-numbered gear-side synchronization clutch 68; an intermediate shaft 20 disposed on the odd-numbered gear-side shifting mechanism 30 side; a first intermediate gear 21 that is disposed on the intermediate shaft 20 and engages the odd-numbered gear-side transmission gear train 32A; an odd-numbered gear-side synchronization gear train 22 that is provided for the intermediate shaft 20 and transmits the rotation thereof to the odd-numbered gear-side synchronization clutch 38; and a second intermediate gear 23 that is disposed on the intermediate shaft 20 and engages the reverse rotation-side main gear 25.

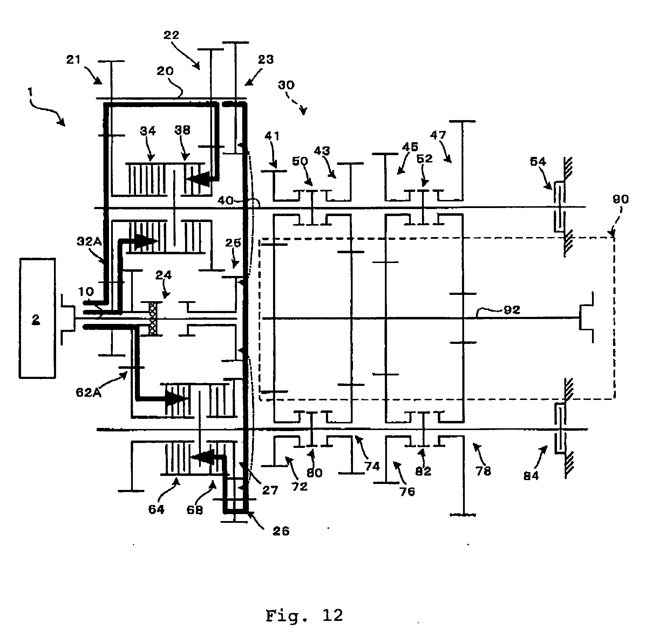

Therefore, as shown in Fig. 12, in the "forward rotation state," the rotation of the input shaft 10 is transmitted to the odd-numbered gear-side main clutch 34 through the odd-numbered gear-side transmission gear train 32A. Also, the rotation of the input shaft 10 is transmitted to the odd-numbered gear-side synchronization clutch 38 through the odd-numbered gear-side transmission gear train 32A, the first intermediate gear 21, the intermediate shaft 20, and the odd-numbered gear-side synchronization gear train 22. The rotation of the input shaft 10 is also transmitted to the even-numbered gear-side main clutch 64 through the even-numbered gear-side transmission gear train 62A. Also, the rotation of the input shaft 10 is transmitted to the even-numbered gear-side synchronization clutch 68 through the odd-numbered gear-side transmission gear train 32A, the first intermediate gear 21, the intermediate shaft 20, the second intermediate gear 23, the reverse rotation-side main gear 25 in an idle state, the idler gear 26, and the even-numbered gear-side synchronization gear 27.

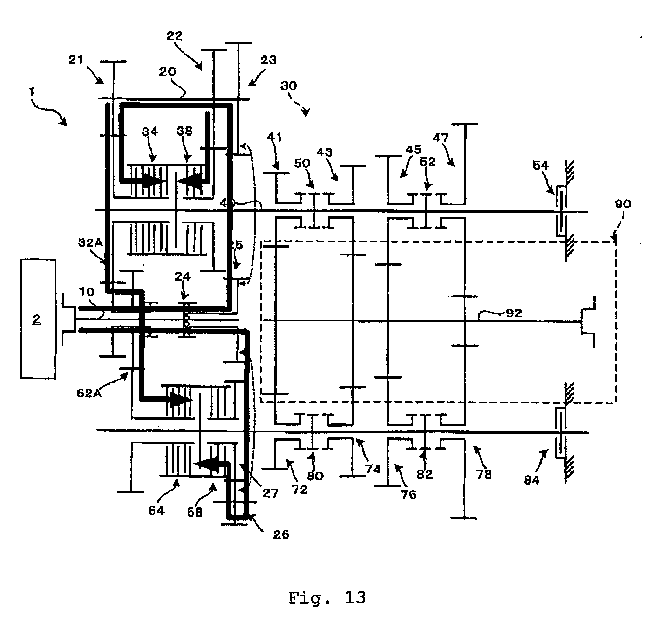

As shown in Fig. 13, in the "reverse rotation state," the rotation of the input shaft 10 is transmitted to the odd-numbered gear-side main clutch 34 through the reverse rotation-side main gear 25, the second intermediate gear 23, the intermediate shaft 20, the first intermediate gear 21, and the odd-numbered gear-side transmission gear train 32A. The rotation of the input shaft 10 is also transmitted to the odd-numbered gear-side synchronization clutch 38 through the reverse rotation-side main gear 25, the second intermediate gear 23, the intermediate shaft 20, and the odd-numbered gear-side synchronization gear train 22. Also, the rotation of the input shaft 10 is transmitted to the even-numbered gear-side main clutch 64 through the reverse rotation-side main gear 25, the second intermediate gear 23, the intermediate shaft 20, the first intermediate gear 21, the odd-numbered gear-side transmission gear train 32A, and the even-numbered gear-side transmission gear train 62A. The rotation of the input shaft 10 is also transmitted to the even-numbered gear-side synchronization clutch 68 through the reverse rotation-side main gear 25, the idler gear 26, and the even-numbered gear-side synchronization gear 27.

When a mechanism capable of selecting one of forward rotation and reverse rotation is installed on the input side, as in this the transmission 1, the input shaft 10 can be easily disposed so as to be coaxial with the output shaft 92 of the output mechanism 90.

The operation of switching between forward rotation and reverse rotation is generally carried out when the motor car is at a stop. In the present embodiment, the forward-reverse rotation selecting mechanical clutch is disposed on the input shaft that is directly connected to the engine. Therefore, the switching operation must be carried out with the engine stopped. Therefore, preferably, synchronization clutches (not shown) similar to the odd-numbered gear-side and even-numbered gear-side synchronization clutches are additionally disposed between the input shaft and the integrally formed input-side gears of the odd-numbered gear-side transmission gear train and the even-numbered gear-side transmission gear train and between the reverse rotation-side main gear and the input shaft. In this manner, the operation of switching between forward rotation and reverse rotation can be carried out with the engine running.

The transmission of the present invention is not limited to the embodiments described above. It is appreciated that various modifications can be made without departing from the scope of the invention as defined in the appended claims.

The inventive twin clutch type transmission for a diesel railcar can be used in various applications such as diesel railcars.

## Claims

1. A twin clutch type transmission for a diesel railcar the twin clutch type transmission **characterized by** comprising:
an input shaft (10) to which power of an engine (2) is inputted;
an odd-numbered gear-side shifting mechanism (30) to which rotation of the input shaft (10) is transmitted;
an even-numbered gear-side shifting mechanism (60) to which the rotation of the input shaft (10) is transmitted; and
an output mechanism (90)to which power of the odd-numbered gear-side shifting mechanism (30) and power of the even-numbered gear-side shifting mechanism (60) are transmitted, wherein
the odd-numbered gear-side shifting mechanism (30) includes
an odd-numbered gear-side transmission gear train (32) for transmitting the rotation of the input shaft (10);
an odd-numbered gear-side transmission shaft (40);
an odd-numbered gear-side main clutch (34) for selectively transmitting power of the odd-numbered gear-side transmission gear train (36) to the odd-numbered gear-side transmission shaft (40);
an odd-numbered gear-side synchronization gear train (36) for transmitting the rotation of the input shaft (10);
an odd-numbered gear-side synchronization clutch (38) for selectively transmitting power of the odd-numbered gear-side synchronization gear train (36) to the odd-numbered gear-side transmission shaft (40);
an odd-numbered gear-side shifting gear train (41, 43, 45, 47) that is provided for the odd-numbered gear-side transmission shaft (40) and transmits rotation thereof to the output mechanism (90); and
an odd-numbered gear-side mechanical clutch (50, 52), and wherein
the even-numbered gear-side shifting mechanism includes:
an even-numbered gear-side transmission gear train (62) for transmitting the rotation of the input shaft (10);
an even-numbered gear-side transmission shaft (70);
an even-numbered gear-side main clutch (64) for selectively transmitting power of the even-numbered gear-side transmission gear train (62) to the even-numbered gear-side transmission shaft (70);
an even-numbered gear-side synchronization gear train (66) for transmitting the rotation of the input shaft (10);
an even-numbered gear-side synchronization clutch (68) for selectively transmitting power of the even-numbered gear-side synchronization gear train (66) to the even-numbered gear-side transmission shaft (70);
an even-numbered gear-side shifting gear train (72, 74, 76, 78) that is provided for the even-numbered gear-side transmission shaft (70) and transmits rotation thereof to the output mechanism (90); and
an even-numbered gear-side mechanical clutch (80, 82)
wherein the twin clutch type transmission provides a plurality of shift gears, and an inter-gear ratio between the adjacent shift gears is set to a substantially constant value;
wherein a gear ratio of the odd-numbered gear-side transmission gear train (32) and a gear ratio of the even-numbered gear-side transmission gear train (62) are set such that a ratio of a rotation speed of the even-numbered gear-side transmission shaft (70) to a rotation speed of the odd-numbered gear-side transmission shaft (40) is substantially equal to the predetermined inter-gear ratio; and
wherein at least the odd-numbered gear-side shifting gear train (41, 43, 45, 47) includes a plurality of shifting gear trains (41, 43, 45, 47), **characterized in that**
the odd-numbered gear-side mechanical clutch (50,52) selectively connects the odd-numbered gear-side shifting gear train (41, 43, 45, 47) to the odd-numbered gear-side transmission shaft (40), **in that**
the even-numbered gear-side mechanical clutch (80,82) selectively connects the even-numbered gear-side shifting gear train (72, 74, 76, 78) to the even-numbered gear-side transmission shaft (70), and **in that**
a gear ratio of one of the odd-numbered gear-side shifting gear trains (41, 43, 45, 47) is substantially equal to a gear ratio of the adjacent even-numbered gear-side shifting gear train (72, 74, 76, 78).

2. The twin clutch type transmission for a diesel railcar according to claim 1, **characterized in that** the odd-numbered gear-side shifting gear train (41, 43, 45, 47) and the even-numbered gear-side shifting gear train (72, 74, 76, 78) share a shift gear of the output mechanism (90).

3. The twin clutch type transmission for a diesel railcar according to claims 1 or 2, **characterized in that** a gear ratio of the odd-numbered gear-side synchronization gear train (36) is set so as to be substantially equal to a value obtained by dividing the gear ratio of the odd-numbered gear-side transmission gear train (66) by the predetermined inter-gear ratio, and that a gear ratio of the even-numbered gear-side synchronization gear train (36) is set so as to be substantially equal to a value obtained by dividing the gear ratio of the even-numbered gear-side transmission gear train (66) by the predetermined inter-gear ratio.

4. The twin clutch type transmission for a diesel railcar according to claim 3, **characterized in that** the gear ratio of the odd-numbered gear-side synchronization gear train (36) is substantially equal to the gear ratio of the even-numbered gear-side transmission gear train (62), and that the odd-numbered gear-side synchronization gear train (62) and the even-numbered gear-side transmission gear train (62) may share a shift gear on the input shaft (10).

5. The twin clutch type transmission for a diesel railcar according to any of claims 1 to 4, **characterized in that** the odd-numbered gear-side transmission shaft (40) and the even-numbered gear-side transmission shaft (70) each are provided with a synchronization brake (54, 84).

6. The twin clutch type transmission for a diesel railcar according to any of claims 1 to 5, **characterized in that** the output mechanism (90) includes an output shaft (94) and a forward-reverse rotation switching mechanical clutch (97) for switching between forward rotation and reverse rotation of the output shaft (94).

7. The twin clutch type transmission for a diesel railcar according to any of claims 1 to 6, **characterized by** comprising a forward-reverse rotation switching mechanical clutch (24) for switching between forward rotation and reverse rotation of an output shaft (92) of the output mechanism (90), the forward-reverse rotation switching mechanical clutch (24) being disposed on the input shaft (10).

## Patentansprüche

1. Getriebe der Doppelkupplungsbauart für ein Dieselschienenfahrzeug, wobei das Getriebe der Doppelkupplungsart **dadurch gekennzeichnet ist, dass** es folgendes aufweist:
eine Eingangswelle (10), zu der eine Leistung einer Maschine (2) eingegeben wird;
einen ungeradzahlgangseitigen Schaltmechanismus (30), zu dem eine Drehung der Eingangswelle (10) übertragen wird;
einen geradzahlgangseitigen Schaltmechanismus (60), zu dem die Drehung der Eingangswelle (10) übertragen wird; und
einen Ausgabemechanismus (90), zu dem eine Leistung des ungeradzahlgangseitigen Schaltmechanismus (30) und eine Leistung des geradzahlgangseitigen Schaltmechanismus (60) übertragen werden, wobei
der ungeradzahlgangseitige Schaltmechanismus (30) folgendes hat:
einen ungeradzahlgangseitigen Übertragungsgetriebezug (32) zum Übertragen der Drehung der Eingangswelle (10);
eine ungeradzahlgangseitige Übertragungswelle (40);
eine ungeradzahlgangseitige Hauptkupplung (34) zum wahlweisen Übertragen einer Leistung des ungeradzahlgangseitigen Übertragungsgetriebezugs (36) zu der ungeradzahlgangseitigen Übertragungswelle (40);
einen ungeradzahlgangseitigen Synchronisationsgetriebezug (36) zum Übertragen der Drehung der Eingangswelle (10);
eine ungeradzahlgangseitige Synchronisationskupplung (38) zum wahlweisen Übertragen einer Leistung des ungeradzahlgangseitigen Synchronisationsgetriebezugs (36) zu der ungeradzahlgangseitigen Übertragungswelle (40);
einen ungeradzahlgangseitigen Schaltgetriebezug (41, 43, 45, 47), der für die ungeradzahlgangseitige Übertragungswelle (40) vorgesehen ist und eine Drehung von dieser zu dem Ausgabemechanismus (90) überträgt; und
eine ungeradzahlgangseitige mechanische Kupplung (50, 52), und wobei
der geradzahlgangseitige Schaltmechanismus folgendes hat:
einen geradzahlgangseitigen Übertragungsgetriebezug (62) zum Übertragen der Drehung der Eingangswelle (10);
eine geradzahlgangseitige Übertragungswelle (70);
eine geradzahlgangseitige Hauptkupplung (64) zur wahlweisen Übertragung einer Leistung des geradzahlgangseitigen Übertragungsgetriebezugs (64) zu der geradzahlgangseitigen Übertragungswelle (70);
einen geradzahlgangseitigen Synchronisationsgetriebezug (66) zum Übertragen der Drehung der Eingangswelle (10);
eine geradzahlgangseitige Synchronisationskupplung (68) zur wahlweisen Übertragung einer Leistung des geradzahlgangseitigen Synchronisationsgetriebezugs (66) zu der geradzahlgangseitigen Übertragungswelle (70);
einen geradzahlgangseitigen Schaltgetriebezug (72, 74, 76, 78), der für die geradzahlgangseitige Übertragungswelle (70) vorgesehen ist und eine Drehung von dieser zu dem Ausgabemechanismus (90) überträgt; und
eine geradzahlgangseitige mechanische Kupplung (80, 82),
wobei das Getriebe der Doppelkupplungsbauart eine Vielzahl von Schaltgängen vorsieht und ein Zwischenübersetzungsverhältnis zwischen den benachbarten Schaltgängen auf einen im Wesentlichen konstanten Wert festgelegt ist;
wobei ein Übersetzungsverhältnis des ungeradzahlgangseitigen Übertragungsgetriebezugs (32) und ein Übersetzungsverhältnis des geradzahlgangseitigen Übertragungsgetriebezugs (62) derart festgelegt sind, dass ein Verhältnis einer Drehzahl der geradzahlgangseitigen Übertragungswelle (70) zu einer Drehzahl der ungeradzahlgangseitigen Übertragungswelle (40) im Wesentlichen gleich zu dem vorbestimmten Zwischenübersetzungsverhältnis ist; und
wobei wenigstens der ungeradzahlgangseitige Schaltgetriebezug (41, 43, 45, 47) eine Vielzahl von Schaltgetriebezügen (41, 43, 45, 47) hat,
**dadurch gekennzeichnet, dass**
die ungeradzahlgangseitige mechanische Kupplung (50, 52) den ungeradzahlgangseitigen Schaltgetriebezug (41, 43, 45, 47) mit der ungeradzahlgangseitigen Übertragungswelle (40) wahlweise verbindet, dadurch, dass
die geradzahlgangseitige mechanische Kupplung (80, 82) den geradzahlgangseitigen Schaltgetriebezug (72, 74, 76, 78) mit der geradzahlgangseitigen Übertragungswelle (70) wahlweise verbindet, und dadurch, dass
ein Übersetzungsverhältnis von einem der ungeradzahlgangseitigen Schaltgetriebezüge (41, 43, 45, 47) im Wesentlichen gleich zu einem Übersetzungsverhältnis des benachbarten geradzahlgangseitigen Schaltgetriebezugs (72, 74, 76, 78) ist.

2. Getriebe der Doppelkupplungsbauart für ein Dieselschienenfahrzeug nach Anspruch 1, **dadurch gekennzeichnet, dass** sich der ungeradzahlgangseitige Schaltgetriebezug (41, 43, 45, 47) und der geradzahlgangseitige Schaltgetriebezug (72, 74, 76, 78) ein Schaltrad des Ausgabemechanismus (90) teilen.

3. Getriebe der Doppelkupplungsbauart für ein Dieselschienenfahrzeug nach Anspruch 1 oder 2, **dadurch gekennzeichnet, dass** ein Übersetzungsverhältnis des ungeradzahlgangseitigen Synchronisationsgetriebezugs (36) festgelegt ist, um im Wesentlichen gleich zu einem Wert zu sein, der durch Teilen des Übersetzungsverhältnisses des ungeradzahlgangseitigen Übertragungsgetriebezugs (66) durch das vorbestimmte Zwischenübersetzungsverhältnis erhalten wird, und dass ein Übersetzungsverhältnis des geradzahlgangseitigen Synchronisationsgetriebezugs (36) festgelegt ist, um im Wesentlichen gleich zu einem Wert zu sein, der durch Teilen des Übersetzungsverhältnisses des geradzahlgangseitigen Übertragungsgetriebezugs (66) durch das vorbestimmte Zwischenübersetzungsverhältnis erhalten wird.

4. Getriebe der Doppelkupplungsbauart für ein Schienenfahrzeug nach Anspruch 3, **dadurch gekennzeichnet, dass** das Übersetzungsverhältnis des ungeradzahlgangseitigen Synchronisationsgetriebezugs (36) im Wesentlichen gleich zu dem Übersetzungsverhältnis des geradzahlgangseitigen Übertragungsgetriebezugs (62) ist, und dass der ungeradzahlgangseitige Synchronisationsgetriebezug (62) und der geradzahlgangseitige Übertragungsgetriebezug (62) sich ein Schaltrad auf der Eingangswelle (10) teilen können.

5. Getriebe der Doppelkupplungsbauart für ein Dieselschienenfahrzeug nach einem der Ansprüche 1 bis 4, **dadurch gekennzeichnet, dass** die ungeradzahlgangseitige Übertragungswelle (40) und die geradzahlgangseitige Übertragungswelle (70) jeweils mit einer Synchronisationsbremse (54, 84) versehen sind.

6. Getriebe der Doppelkupplungsbauart für ein Dieselschienenfahrzeug nach einem der Ansprüche 1 bis 5, **dadurch gekennzeichnet, dass** der Ausgabemechanismus (90) eine Ausgangswelle (94) und eine mechanische Vorwärts-Rückwärts-Drehungsumschaltkupplung (97) zum Umschalten zwischen einer Vorwärtsdrehung und einer Rückwärtsdrehung der Ausgangswelle (94) hat.

7. Getriebe der Doppelkupplungsbauart für ein Dieselschienenfahrzeug nach einem der Ansprüche 1 bis 6, **dadurch gekennzeichnet, dass** es eine mechanische Vorwärts-Rückwärts-Drehungsumschaltkupplung (24) zum Umschalten zwischen einer Vorwärtsdrehung und einer Rückwärtsdrehung einer Ausgangswelle (92) des Ausgabemechanismus (90) aufweist, wobei die mechanische Vorwärts-Rückwärts-Drehungsumschaltkupplung (24) auf der Eingangswelle (10) angeordnet ist.

## Revendications

1. Transmission du type à double embrayage pour un autorail diesel, la transmission du type à double embrayage étant **caractérisée en ce qu'**elle comprend :
un arbre d'entrée (10) auquel la puissance d'un moteur (2) est introduite ;
un mécanisme de changement de vitesse (30) côté rapports de vitesse impairs auquel la rotation de l'arbre d'entrée (10) est transmise ;
un mécanisme de changement de vitesse (60) côté rapports de vitesse pairs auquel la rotation de l'arbre d'entrée (10) est transmise ; et
un mécanisme de sortie (90) auquel la puissance du mécanisme de changement de vitesse (30) côté rapports de vitesse impairs et la puissance du mécanisme de changement de vitesse (60) côté rapports de vitesse pairs sont transmises, où
le mécanisme de changement de vitesse (30) côté rapports de vitesse impairs comporte :
un train d'engrenages de transmission (32) côté rapports de vitesse impairs pour transmettre la rotation de l'arbre d'entrée (10) ;
un arbre de transmission (40) côté rapports de vitesse impairs ;
un embrayage principal (34) côté rapports de vitesse impairs pour transmettre sélectivement la puissance du train d'engrenages de transmission (36) côté rapports de vitesse impairs à l'arbre de transmission (40) côté rapports de vitesse impairs ;
un train d'engrenages de synchronisation (36) côté rapports de vitesse impairs pour transmettre la rotation de l'arbre d'entrée (10) ;
un embrayage de synchronisation (38) côté rapports de vitesse impairs pour transmettre sélectivement la puissance du train d'engrenages de synchronisation (36) côté rapports de vitesse impairs à l'arbre de transmission (40) côté rapports de vitesse impairs ;
un train d'engrenages de changement de vitesse (41, 43, 45, 47) côté rapports de vitesse impairs qui est fourni à l'arbre de transmission (40) côté rapports de vitesse impairs et transmet sa rotation au mécanisme de sortie (90) ; et
un embrayage mécanique (50, 52) côté rapports de vitesse impairs, et où
le mécanisme de changement de vitesse côté rapports de vitesse pairs comporte :
un train d'engrenages de transmission (62) côté rapports de vitesse pairs pour transmettre la rotation de l'arbre d'entrée (10) ;
un arbre de transmission (70) côté rapports de vitesse pairs ;
un embrayage principal (64) côté rapports de vitesse pairs pour transmettre sélectivement la puissance du train d'engrenages de transmission (62) côté rapports de vitesse pairs à l'arbre de transmission (70) côté rapports de vitesse pairs ;
un train d'engrenages de synchronisation (66) côté rapports de vitesse pairs pour transmettre la rotation de l'arbre d'entrée (10) ;
un embrayage de synchronisation (68) côté rapports de vitesse pairs pour transmettre sélectivement la puissance du train d'engrenages de synchronisation (66) côté rapports de vitesse pairs à l'arbre de transmission (70) côté rapports de vitesse pairs ;
un train d'engrenages de changement de vitesse (72, 74, 76, 78) côté rapports de vitesse pairs qui est fourni à l'arbre de transmission (70) côté rapports de vitesse pairs et transmet sa rotation au mécanisme de sortie (90) ; et
un embrayage mécanique (80, 82) côté rapports de vitesse pairs ;
où la transmission du type à double embrayage fournit une pluralité d'engrenages de changement de vitesse, et un rapport inter-engrenages entre les engrenages de changement de vitesse adjacents est réglé à une valeur sensiblement constante ;
où un rapport d'engrenage du train d'engrenages de transmission (32) côté rapports de vitesse impairs et un rapport d'engrenage du train d'engrenages de transmission (62) côté rapports de vitesse pairs sont réglés de sorte qu'un rapport d'une vitesse de rotation de l'arbre de transmission (70) côté rapports de vitesse pairs sur une vitesse de rotation de l'arbre de transmission (40) côté rapports de vitesse impairs soit sensiblement égal au rapport inter-engrenages prédéterminé ; et
où au moins le train d'engrenages de changement de vitesse (41, 43, 45, 47) côté rapports de vitesse impairs comporte une pluralité de trains d'engrenages de changement de vitesse (41, 43, 45, 47),
**caractérisée en ce que**
l'embrayage mécanique (50, 52) côté rapports de vitesse impairs relie sélectivement le train d'engrenages de changement de vitesse (41, 43, 45, 47) côté rapports de vitesse impairs à l'arbre de transmission (40) côté rapports de vitesse impairs, **en ce que**
l'embrayage mécanique (80, 82) côté rapports de vitesse pairs relie sélectivement le train d'engrenages de changement de vitesse (72, 74, 76, 78) côté rapports de vitesse pairs à l'arbre de transmission (70) côté rapports de vitesse pairs, et **en ce que**
un rapport d'engrenage de l'un des trains d'engrenages de changement de vitesse (41, 43, 45, 47) associés aux rapports impairs est sensiblement égal à un rapport d'engrenage du train d'engrenages de changement de vitesse (72, 74, 76, 78) adjacent côté rapports de vitesse pairs.

2. Transmission du type à double embrayage pour un autorail diesel selon la revendication 1, **caractérisée en ce que** le train d'engrenages de changement de vitesse (41, 43, 45, 47) côté rapports de vitesse impairs et le train d'engrenages de changement de vitesse (72, 74, 76, 78) côté rapports de vitesse pairs se partagent un engrenage de changement de vitesse du mécanisme de sortie (90).

3. Transmission du type à double embrayage pour un autorail diesel selon la revendications 1 ou 2, **caractérisée en ce qu'**un rapport d'engrenage du train d'engrenages de synchronisation (36) côté rapports de vitesse impairs est réglé de manière à être sensiblement égal à une valeur obtenue en divisant le rapport d'engrenage du train d'engrenage de transmission (66) côté rapports de vitesse impairs par le rapport inter-engrenages prédéterminé, et **en ce qu'**un rapport d'engrenage du train d'engrenages de synchronisation (36) côté rapports de vitesse pairs est réglé de manière à être sensiblement égal à une valeur obtenue en divisant le rapport d'engrenage du train d'engrenages de transmission (66) côté rapports de vitesse pairs par le rapport inter-engrenages prédéterminé.

4. Transmission du type à double embrayage pour un autorail diesel selon la revendication 3, **caractérisée en ce que** le rapport d'engrenage du train d'engrenages de synchronisation (36) côté rapports de vitesse impairs est sensiblement égal au rapport d'engrenage du train d'engrenages de transmission (62) côté rapports de vitesse pairs, et **en ce que** le train d'engrenages de synchronisation (62) côté rapports de vitesse impairs et le train d'engrenages de transmission (62) côté rapports de vitesse pairs peuvent se partager un engrenage de changement de vitesse sur l'arbre d'entrée (10).

5. Transmission du type à double embrayage pour un autorail diesel selon l'une des revendications 1 à 4, **caractérisée en ce que** chacun de l'arbre de transmission (40) côté rapports de vitesse impairs et de l'arbre de transmission (70) côté rapports de vitesse pairs est pourvu d'un frein de synchronisation (54, 84).

6. Transmission du type à double embrayage pour un autorail diesel selon l'une des revendications 1 à 5, **caractérisée en ce que** le mécanisme de sortie (90) comporte un arbre de sortie (94) et un embrayage mécanique (97) de commutation de rotation avant-arrière pour commuter entre la rotation avant et la rotation arrière de l'arbre de sortie (94).

7. Transmission du type à double embrayage pour un autorail diesel, selon l'une des revendications 1 à 6, **caractérisée en ce qu'**elle comprend un embrayage mécanique (24) de commutation de rotation avant-arrière pour commuter entre la rotation avant et la rotation arrière d'un arbre de sortie (92) du mécanisme de sortie (90), l'embrayage mécanique (24) de commutation de rotation avant-arrière étant disposé sur l'arbre d'entrée (10).
